# EUROPEAN PATENT SPECIFICATION

(11) **EP 2 781 414 B1**
(45) Date of publication and mention of the grant of the patent: **10.05.2017**
(21) Application number: 14161205.1
(22) Date of filing: 21.03.2014
(51) Int. Cl.: B60R 25/021

(54) **Mechanical steering lock for vehicles**
Mechanisches Lenkschloss für Fahrzeuge
Verrou mécanique de direction pour véhicules

(30) Priority: 22.03.2013 IT TO20130239
(43) Date of publication of application: 24.09.2014
(73) Proprietor: TRW Automotive Italia S.r.l., Torino (IT)
(72) Inventor: Graglia, Daniele, 10026 SANTENA (IT)
(74) Representative: Boggio, Luigi

(56) References cited:
- EP-A2- 0 742 127
- EP-A2- 1 707 457
- DE-A1- 4 340 260

## Description

The present invention relates to a mechanical steering lock for vehicles and an electric rotating switch suitable for a mechanical steering lock.

The need is felt in the field of mechanical steering locks for vehicles in general, and motor vehicles in particular, to indicate to a user a corresponding electric function of the steering lock for each angular position of the key, such as the function of switching on the electrical panel, auxiliary panel, of starting, of stopping, etc.

In order to emit an electrical signal according to the angular position of a mechanical control member, it is known to date to use an electric rotating switch of the type comprising an outer casing, a plate made of electrically insulating material carrying a plurality of fixed electric contacts electrically isolated from each other. Each switch also comprises a movable member having a plurality of movable electric contacts which each slidingly cooperate with a respective fixed electric contact.

The fixed electric contacts in the solutions known consist of blocks of conducting material, which extend through the supporting plate, from one side of the supporting plate to the other, and are normally co-moulded with the supporting plate. Certain parts of the conducting block(s) are cut and removed following the co-moulding, thereby making the fixed electric contacts.

Known switches of the above-described type are particularly complex and therefore costly to make, however they are applied to all cases in which high currents flow through the electric contacts, for example in the range of ten or more amperes.

In any case, the use of the known switches is not convenient and, in any event, to be avoided due to insufficient efficiency when the currents used, such as in the case of mechanical steering locks, are extremely modest and in particular, in the range of one hundred mA.

A mechanical steering lock device manually operable by a mechanical key and a switch coupled to the rotary electric steering lock device mechanically is disclosed, for example, in document DE 43 40 260 A1, which shows the preamble of claims 1 and 7.

The object of the present invention is to make a mechanical steering lock for vehicles, which allows the above-mentioned problem to be solved in a simple and affordable manner and in particular, an electric steering lock, which is easy to make, has contained costs and increased efficiency and reliability.

A mechanical steering lock for vehicles is provided according to claim 1.

The present invention also relates to an electric rotating switch for a mechanical steering lock.

According to the present invention, an electric rotating switch is made as claimed in claim 7.

The present invention will now be described with reference to the accompanying drawings, which illustrate a non-limiting exemplary embodiment thereof, in which:
figure 1 is a perspective view of a preferred embodiment of the mechanical steering lock for vehicles made according to the dictates of the present invention and coupled to a steering shaft;
figure 2 is a perspective view, with parts removed for clarity, of a detail in figure 1;
figure 3 is a plan view, with parts removed for clarity, of the detail in figure 2;
figures 4-7 are similar figures to figure 2 and illustrate, with parts removed for clarity, the detail in figure 2 under four different functional conditions; and
figure 8 is a cross section, on enlarged scale, according to line VIII-VIII in figure 3.

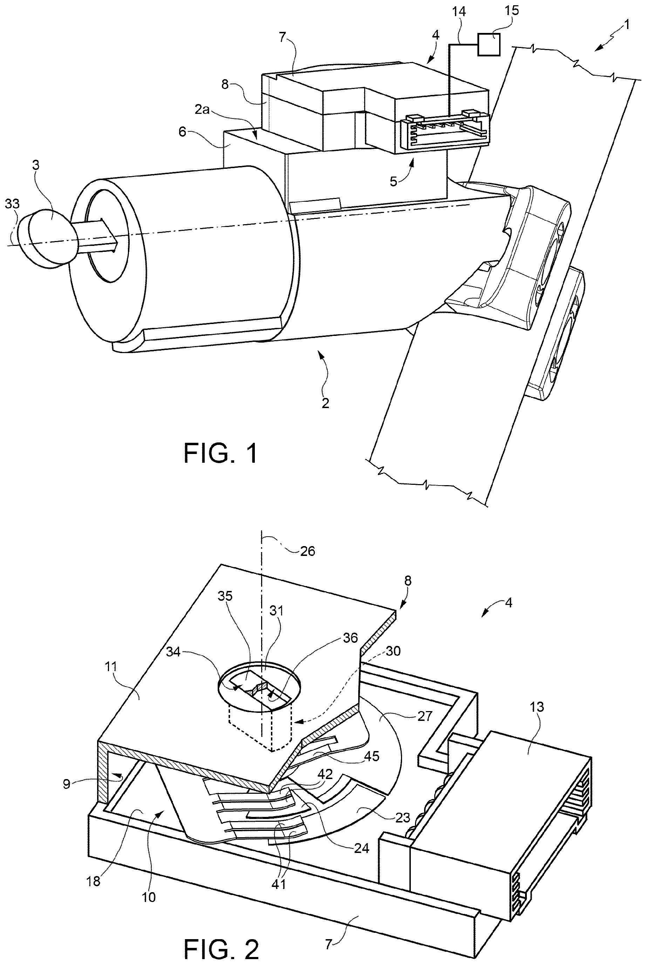

Numeral 1 in figure 1 indicates the mechanical steering lock for vehicles as a whole. The steering lock 1 comprises a mechanical steering lock device 2 with an outer casing 6 and manually operable by means of a mechanical operating key 3. The steering lock 1 also comprises an electric rotating switch 4 coupled to the mechanical steering lock device 2 to associate a corresponding electric function of the steering lock 1 with each angular position of key 3.

Switch 4 is different and separable from the steering lock device 2 and in turn comprises an outer casing 5, which extends entirely outside the casing 6 of the steering lock device 2 and in turn comprises a lower hollow body 7, conveniently quadrangular, and an upper closing cover 8, which is also hollow and delimiting a sealed chamber 9 with the hollow chamber.

Housed inside the lower body 7 is a printed circuit board 10, generically known as PCB, which is stably connected to the lower hollow body 7 in position facing and parallel to a flat upper wall 11 of the closing cover 8.

Housed inside chamber 9 is an electric connector 13, which, in the particular embodiment described, is partly overlapping plate 10 and protrudes outside cavity 9 to be connected to an electric wiring harness 14 for connection to a control unit 15 for managing the signals received.

With reference to figures 2-7, plate 10 carries a plurality of fixed circular sector electric contacts 16, which are arranged on an upper outer surface 18 of plate 10 facing the upper wall 11 of cover 8. Conveniently, each fixed contact 16 is defined by a respective layer of conducting material directly deposited on surface 18 of plate 10 and having a thickness on the order of 1 micron.

In the particular embodiment described, plate 10 carries four fixed circular sector contacts, indicated with 22, 23, 24 and 25, surrounding a common axis 26 orthogonal to surface 18 and wall 11.

Contact 22 has a larger surface than the one of the other contacts and comprises two circular lobes 27 and 28 with different extension, arranged on substantially opposite parts of axis 26. The contacts 23 and 24 are instead circular sectors arranged in one of the spaces delimited by the two lobes 27 and 28, while contact 25 is arranged in the other one of the spaces delimited by the lobes 27 and 28.

Again with reference to figure 2, switch 4 further comprises a rotating switching member 30 interposed between plate 10 and wall 11 in position facing the outer surface 18 of the supporting plate 10 and the fixed contacts 22-25.

The rotating member 30 has a connection and support portion 31, which extends through wall 11 and is coupled to wall 11 pivotally about axis 26 in axially fixed position.

The connection portion 31 is releasably coupled and angularly fixed to an auxiliary control member 34 of the steering lock device 2; the auxiliary member 34 is different and separate from a member for operating an angular locking lug of the steering lock device 2 and protrudes outside the outer casing 6 coaxially to axis 26 and orthogonally to an axis 33 for inserting and rotating key 3. In the particular embodiment described, the auxiliary member 34 comprises a multi-faceted terminal stretch 35 which engages an outer housing seat 36 obtained in the connection portion 31, in an angularly fixed manner.

The rotating member 30 further comprises a Z-shaped monolithic plate 37, which extends parallel to surface 18 in position spaced apart from surface 18 and comprises an intermediate portion 38 integrally connected with the connection portion 31 and two arms 39 and 40 which extend overhangingly in opposite directions.

Arm 39 carries two pairs 40 of elastic fins 41 and 42 side-by-side, conveniently made in one piece with arm 39.

Arm 40 instead carries one single pair of fins 43 side-by-side.

Finally, both the arms 39 and 40 carry respective individual fins indicated with 44 and 45, which extend on opposite sides of axis 26 in opposite directions.

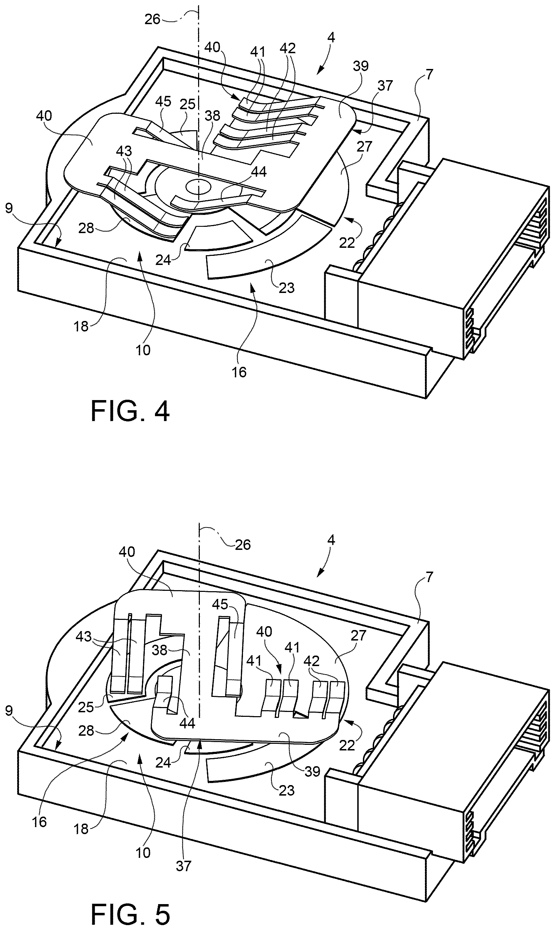

Starting from the functional condition of the steering lock illustrated in figure 4 in which key 3 is in an "off" position of extraction/insertion and in which all the fins 41-45 are arranged in contact against contact 22, by rotating key 3 about axis 33, the rotating member 30 is progressively rotated by the auxiliary member 34 about axis 26 and the steering lock device 2 is brought firstly to a condition of supplying accessories, such as for example the radio, illustrated in figure 5, in which the blades 41, 42, 44 and 45 are arranged in contact against contact 22 and the blades 43 in contact against contact 25.

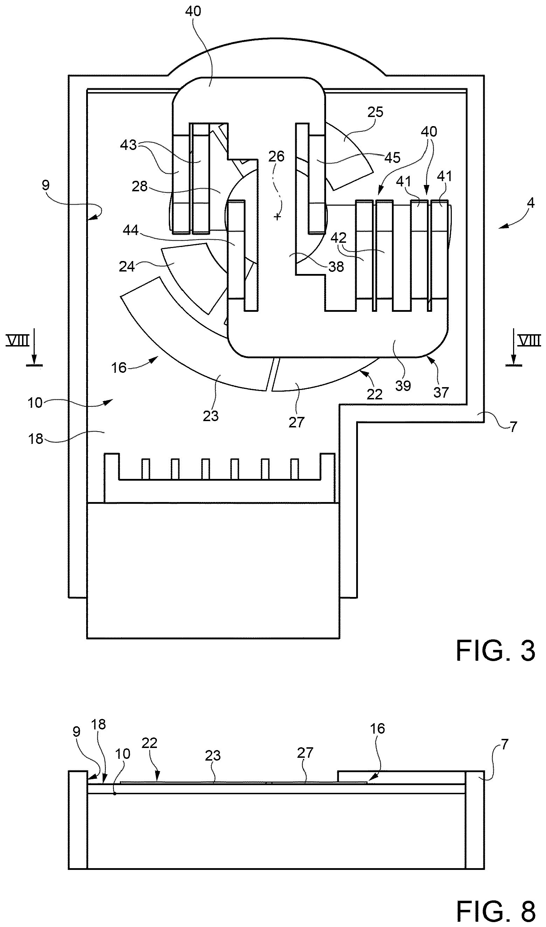

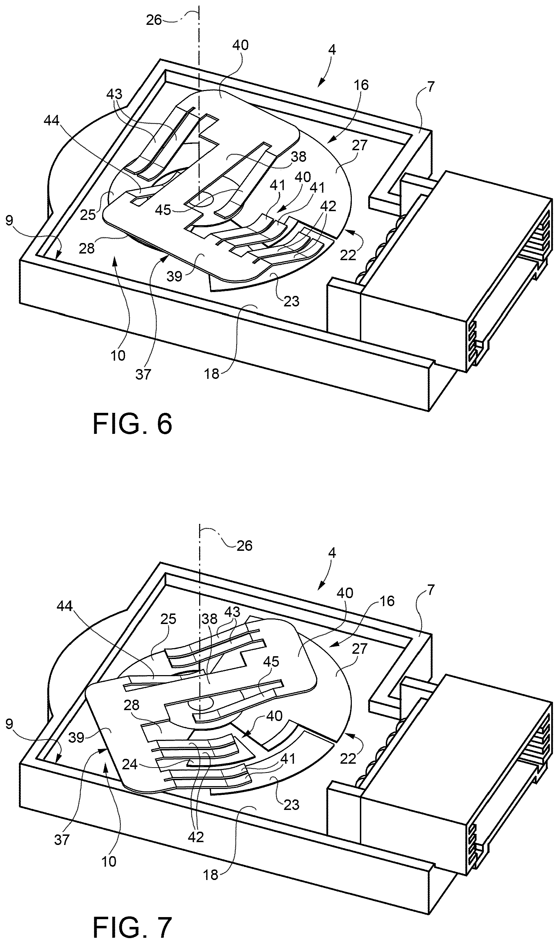

Following a further rotation of key 3, the steering lock device 2 is brought under a further "key on" condition, illustrated in figure 6, in which the blades 42, 44 and 45 are still against contact 22, while the blades 41 cooperate with contact 23 and the blades 43 with contact 25 and then under a "start" condition, illustrated in figure 8, in which the blades 44 and 45 again cooperate against contact 22, while the blades 41, 42 and 43 cooperate against contact 23, 24 and 25, respectively.

From what stated above it is clear that the steering lock 1 described is particularly simple to make, has contained costs and increased efficiency and operating reliability under the condition in which the electric contacts 22-25 are crossed by a low intensity electric current.

This is mainly due to the construction simplicity and the particularly contained costs of the electric switch 4 and, in particular, to the fact of providing fixed electric reed contacts resting directly on the outer surface of the PCB plate. As they are extremely thin with respect to traditional known fixed connectors, such electric reed contacts allow the functions of the steering lock to be operated, and in particular the accessory function, which may be operated by causing low intensity currents to transit.

Finally, in device 1 described, the rotating switch 4 is arranged entirely outside casing 6 of the steering lock device 2 and is releasably coupled to the steering lock device 2 by simply axially removing the auxiliary control member 35 from seat 36 of switch 4 and, in any case, without compromising and/or inhibiting and/or affecting the functionality of the steering lock device 2.

It is apparent from the above that modifications and variants may be made to the steering lock 1 described, without departing from the scope of protection defined by the independents claims. In particular, the rotating switch 4 could be arranged in a different position than the one indicated by way of example, and the fixed contacts 22-25, again of reed type, could be made in a different manner with respect to the one indicated and/or have different shapes or geometries than the ones described, for example to indicate or perform different functions with respect to the ones described.

## Claims

1. - A mechanical steering lock (1) for vehicles; the steering lock comprising a mechanical steering lock device (2) manually operable by means of a mechanical key (3) and an electric rotating switch (4) coupled to the mechanical steering lock device (2) to associate an electric function of the steering lock with each position of the key (3); the steering lock device (2) comprising a control member (34) operated by said mechanical key (3) and said electric rotating switch (4) comprising a printed circuit board (10), an operating member (30) facing an outer flat surface of said printed circuit board (10) and coupled to a fixed support, pivotally about a fixed axis (26) orthogonal to said outer flat surface and in a position axially fixed and angularly integral with said control member (34); fixed first electric contacts (22; 23; 24; 25) carried by said printed circuit board; and movable second electric contacts (37), which are adapted to slidingly cooperate in a selective manner with said fixed first electric contacts and are angularly integral with said operating member (30); said fixed first electric contacts each comprising a respective layer of conducting material electrically insulated from the other layers and resting on said outer flat surface; **characterized in that** said rotating switch comprises an outer casing (5) different from an outer casing (6) of said steering lock device (2) and releasably coupled to the casing of the steering lock device; the outer casing (5) of said rotating switch housing said printed circuit board, said fixed first electric contacts and at least said movable second contacts; the outer casing being arranged entirely outside the casing of said steering lock device (2).

2. - The steering lock according to claim 1, **characterized in that** each said layer is directly deposited on said printed circuit board (10).

3. - The steering lock according to any one of the preceding claims, **characterized in that** said movable electric contacts comprise a substantially Z-shaped rotating body (37), comprising an intermediate portion angularly integral with said operating member, two opposite side arms and a plurality of elastic fins made of electrically conductive material and arranged as a comb on said rotating body to slidingly cooperate with respective said layers.

4. - The steering lock according to claim 3, **characterized in that** said rotating body (30) comprises a pair of said elastic fins arranged parallel to each other and side-by-side for at least some of said layers.

5. - The steering lock according to any of the preceding claims, **characterized in that** said control member (34) is different and separate from a member for operating an angular locking lug of said steering lock device and protrudes outside from an outer casing (6) of said steering look coaxially to said fixed axis (26) and orthogonally to an axis (33) for inserting and rotating said key (3).

6. - The steering lock according to any one of the preceding claims, **characterized in that** said control member (34) is different from a member for controlling an angular retaining lug of said steering lock device.

7. - An electric rotating switch (4) suitable for a mechanical steering lock (2); the electric rotating switch comprising a printed circuit board (10), an operating member (30) suitable to be coupled to a control member (34) of the steering look device (2) and facing to a flat outer surface (11) of said printed circuit board and coupled to a fixed support, pivotally about a fixed axis (26) orthogonal to said outer flat surface and in an axially fixed position; fixed first electric contacts carried by said printed circuit board; and movable second electric contacts, which are adapted to slidingly cooperate in a selective manner with said fixed first electric contacts and are angularly integral with said operating member; said fixed first electric contacts each comprising a respective layer of conducting material electrically insulated from the other layers and resting on said outer flat surface; **characterized in that** it comprises an outer casing (5), suitable for being arranged entirely outside the casing (6) of the steering lock device (2) and to be releasably coupled to the casing (6); the outer casing (5) of said rotating switch housing said printed circuit board, said fixed first electric contacts and at least said movable second contacts; the operative member (30) being coupled to the outer casing (5) pivotally about said fixed axis (26) in an axially fixed position.

8. - The switch according to claim 7, **characterized in that** each said layer is directly deposited on said printed circuit board.

9. - The switch according to claim 7 or 8, **characterized in that** said movable electric contacts comprise a substantially Z-shaped rotating body (37), comprising an intermediate portion angularly integral with said operating member, two opposite side arms and a plurality of elastic fins made of electrically conducting material and arranged as a comb on said rotating body to slidingly cooperate with respective said layers.

10. - The switch according to claim 9, **characterized in that** said rotating body comprises a pair of said elastic fins arranged parallel to each other and arranged side-by-side for at least some of said layers.

## Patentansprüche

1. Mechanisches Lenkschloss (1) für Fahrzeuge; das Lenkschloss umfasst eine mechanische Lenkschlossvorrichtung (2), welche mittels eines mechanischen Schlüssels (3) bedienbar ist und einen drehbaren elektrischen Schalter (4), welcher mit der mechanischen Lenkschlossvorrichtung (2) gekoppelt ist, um jeder Position des Schlüssels (3) eine elektrische Funktion des Lenkschlosses zuzuordnen; die Lenkschlossvorrichtung (2) umfasst ein durch den mechanischen Schlüssel (3) bedienbares Steuerelement (34) und der drehbare elektrische Schalter (4) umfasst eine gedruckte Leiterplatte (10), einem einer äußeren ebenen Oberfläche der gedruckten Leiterplatte (10) zugewandtes Bedienelement (30), welches mit einem festen Träger drehbeweglich um eine feststehende Achse (26) orthogonal zu der äußeren ebenen Oberfläche und in einer axial feststehenden Position und hinsichtlich der Winkellage mit dem Steuerelement (34) zusammengefasst verbunden ist; feststehende erste von der gedruckten Leiterplatte getrage elektrische Kontakte (22, 23, 24, 25); und bewegliche zweite elektrische Kontakte (37), welche dazu ausgebildet sind, gleitend in auswählender Weise mit den feststehenden ersten elektrischen Kontakten zusammenzuwirken, und welche hinsichtlich ihrer Winkellage mit dem Steuerelement (30) zusammengefasst ausgebildet sind; jeder der feststehenden ersten elektrischen Kontakte umfasst jeweils eine Kontaktschicht aus leitendem Material, welche elektrisch von den anderen Kontaktschichten isoliert ist und auf der äußeren ebenen Oberfläche liegt; **gekennzeichnet dadurch, dass** der drehbare Schalter ein äußeres Gehäuse (5) aufweist, welches sich von einem äußeren Gehäuse (6) der Lenkschlossvorrichtung (2) unterscheidet, und welches lösbar mit dem Gehäuse der Lenkschlossvorrichtung gekoppelt ist; das äußere Gehäuse (5) des drehbaren Schalters beherbergt die gedruckte Leiterplatte, die feststehenden ersten elektrischen Kontakte und zumindest die zweiten beweglichen Kontakte; das äußere Gehäuse ist vollständig außerhalb des Gehäuses der Lenkschlossvorrichtung (2) angeordnet.

2. Lenkschloss nach Anspruch 1, **dadurch gekennzeichnet, dass** jede der Kontaktschichten direkt auf der gedruckten Leiterplatte (10) aufgebracht ist.

3. Lenkschloss gemäß einem beliebigen der vorhergehenden Ansprüche, **dadurch gekennzeichnet, dass** die beweglichen elektrischen Kontakte einen im wesentlichen Z-förmigen drehbaren Körper (37) aufweisen, welcher ein Zwischenstück aufweist, das hinsichtlich seiner Winkellage mit dem Betätigungselement zusammengefasst ausgebildet ist, zwei gegenüberliegende Seitenarme und eine Mehrzahl von elastischen Lamellen, hergestellt aus einem elektrisch leitenden Material und als Kamm auf dem drehbaren Körper angeordnet, um in gleitender Verbindung mit jeweils einer der Kontaktschichten zu stehen.

4. Lenkschloss gemäß Anspruch 3, **dadurch gekennzeichnet, dass** der drehbare Körper (30) ein Paar der elastischen Lamellen aufweist, welche parallel zueinander und Seite an Seite für zumindest einige der Kontaktschichten angeordnet sind.

5. Lenkschloss gemäß einem beliebigen der vorhergehenden Ansprüche, **dadurch gekennzeichnet, dass** das Steuerelement (34) unterschiedlich und getrennt von einem Element zur Bedienung einer Winkelsperrklinke der Lenkschlossvorrichtung ist und sich nach außerhalb des äußeren Gehäuses (6) des Lenkschlosses koaxial zu der feststehenden Achse (26) und orthogonal zu einer Achse (33) für das Einführen und Drehen des Schlüssels (3) erstreckt.

6. Lenkschloss gemäß einem beliebigen der vorhergehenden Ansprüche, **dadurch gekennzeichnet, dass** das Steuerelement (34) sich von dem Element zur Steuerung der Winkelöffnungsklinke der Lenkschlossvorrichtung unterscheidet.

7. Ein drehbarer elektrischer Schalter (4) geeignet für eine mechanische Lenkschlossvorrichtung (2); der drehbare elektrische Schalter (4) umfasst eine gedruckte Leiterplatte (10), ein Bedienelement (30), welches geeigent ist, mit einem Steuerlement (34) der Lenkschlossvorrichtung (2) gekoppelt zu werden, und welches einer äußeren ebenen Oberfläche (11) der gedruckten Leiterplatte zugewandtes Bedienelement, welches mit einem festen Träger drehbeweglich um eine feststehende Achse (26) orthogonal zu der äußeren ebenen Oberfläche und in einer axial feststehenden Position verbunden ist; feststehende erste von der gedruckten Leiterplatte getrage elektrische Kontakte, und bewegliche zweite elektrische Kontakte, welche dazu ausgebildet sind, gleitend in auswählender Weise mit den feststehenden ersten elektrischen Kontakten zusammenzuwirken, und welche hinsichtlich ihrer Winkellage mit dem Steuerelement zusammengefasst ausgebildet sind; jeder der feststehenden ersten elektrischen Kontakte umfasst jeweils eine Kontaktschicht aus leitendem Material, welche elektrisch von den anderen Kontaktschichten isoliert ist und auf der äußeren ebenen Oberfläche liegt; **gekennzeichnet dadurch, dass** er ein äußeres Gehäuse (5) aufweist, welches welches geeigent ist gänzlich außerhalb des äußeren Gehäuse (6) der Lenkschlossvorrichtung (2) angeordnet und lösbar mit dem äußeren Gehäuse (6), das äußere Gehäuse (5) des drehbaren Schalters beherbergt die gedruckte Leiterplatte, die feststehenden ersten elektrischen Kontakte und zumindest die zweiten beweglichen Kontakte; des Bedienelement (30) ist mit dem äußeren Gehäuse (5) drehbeweglich und axial fixiert bezüglich der feststehenden Achse (26) verbunden.

8. Der Schalter gemäß Anspruch 7, **dadurch gekennzeichnet, dass** jede der Kontaktschichten direkt auf der gedruckten Leiterplatte aufgebracht ist.

9. Der Schalter gemäß Anspruch 7 oder 8, **dadurch gekennzeichnet, dass** die beweglichen elektrischen Kontakte einen im wesentlichen Z-förmigen drehbaren Körper (37) aufweisen, welcher ein Zwischenstück aufweist, das hinsichtlich seiner Winkellage mit dem Betätigungselement zusammengefasst ausgebildet ist, zwei gegenüberliegende Seitenarme und eine Mehrzahl von elastischen Lamellen hergestellt aus einem elektrisch leitenden Material und als Kamm auf dem drehbaren Körper angeordnet, um in gleitender Verbindung mit jeweils einer der Kontaktschichten zu stehen.

10. Der Schalter gemäß Anspruch 9, **dadurch gekennzeichnet, dass** der drehbare Körper (30) ein Paar dieser elastischen Lamellen aufweist, welche parallel zueinander und Seite an Seite für zumindest einige der Kontaktschichten angeordnet sind.

## Revendications

1. Verrou de direction mécanique (1) pour véhicules ; le verrou de direction comprenant un dispositif de verrou de direction mécanique (2) pouvant être actionné manuellement au moyen d'une clé mécanique (3) et d'un commutateur électrique rotatif (4) couplé au dispositif de verrou de direction mécanique (2) pour associer une fonction électrique du verrou de direction à chaque position de la clé (3) ; le dispositif de verrou de direction (2) comprenant un élément de commande (34) actionné par ladite clé mécanique (3) et ledit commutateur électrique rotatif (4) comprenant une carte de circuit imprimé (10), un élément d'actionnement (30) faisant face à une surface plate externe de la carte de circuit imprimé (10) et couplé à un support fixe, de manière pivotante autour d'un axe fixe (26) orthogonal à ladite surface plate externe et dans une position axialement fixe et angulairement solidaire avec ledit élément de commande (34) ; des premiers contacts électriques fixes (22 ; 23 ; 24 ; 25) portés par ladite carte de circuit imprimé ; et des seconds contacts électriques mobiles (37) qui sont adaptés pour coopérer de manière coulissante, d'une manière sélective, avec lesdits premier contacts électriques fixes et sont angulairement solidaires avec ledit élément d'actionnement (30) ; lesdits premiers contacts électriques fixes comprenant chacun une couche respective de matériau conducteur électriquement isolé des autres couches et s'appuyant sur ladite surface plate externe ; **caractérisé en ce que** ledit commutateur rotatif comprend un boîtier externe (5) différent d'un boîtier externe (6) dudit dispositif de verrou de direction (2) et couplé de manière amovible au boîtier du dispositif de verrou de direction ; le boîtier externe (5) dudit commutateur rotatif logeant ladite carte de circuit imprimé, lesdits premiers contacts électriques fixes et au moins lesdits seconds contacts mobiles ; le boîtier externe étant agencé entièrement à l'extérieur du boîtier dudit dispositif de verrou de direction (2).

2. Verrou de direction selon la revendication 1, **caractérisé en ce que** chacune desdites couches est directement déposée sur ladite carte de circuit imprimé (10).

3. Verrou de direction selon l'une quelconque des revendications précédentes, **caractérisé en ce que** lesdits contacts électriques mobiles comprennent un corps rotatif (37) sensiblement en forme de Z, comprenant une partie intermédiaire angulairement solidaire avec ledit élément d'actionnement, deux bras latéraux opposés et une pluralité d'ailettes élastiques réalisées avec un matériau électriquement conducteur et agencées comme un peigne sur ledit corps rotatif pour coopérer de manière coulissante avec lesdites couches respectives.

4. Verrou de direction selon la revendication 3, **caractérisé en ce que** ledit corps rotatif (30) comprend une paire desdites ailettes élastiques agencées parallèlement entre elles et côte-à-côte pour au moins certaines desdites couches.

5. Verrou de direction selon l'une quelconque des revendications précédentes, **caractérisé en ce que** ledit élément de commande (34) est différent et séparé d'un élément pour actionner une patte de verrouillage angulaire dudit dispositif de verrou de direction et fait saillie vers l'extérieur à partir d'un boîtier externe (6) dudit verrou de direction de manière coaxiale par rapport audit axe fixe (26) et orthogonale à un axe (33) pour insérer et faire tourner ladite clé (3).

6. Verrou de direction selon l'une quelconque des revendications précédentes, **caractérisé en ce que** ledit élément de commande (34) est différent d'un élément pour commander une patte de retenue angulaire dudit dispositif de verrou de direction.

7. Commutateur électrique rotatif (4) approprié pour un verrou de direction mécanique (2) ; le commutateur électrique rotatif comprenant une carte de circuit imprimé (10), un élément d'actionnement (30) approprié pour être couplé à un élément de commande (34) du dispositif de verrou de direction (2) et faisant face à une surface externe plate (11) de ladite carte de circuit imprimé et couplé à un support fixe, de manière pivotante autour d'un axe fixe (26) orthogonal à ladite surface plate externe et dans une position axialement fixe ; des premiers contacts électriques fixes portés par ladite carte de circuit imprimé ; et des seconds contacts électriques mobiles qui sont adaptés pour coopérer de manière coulissante, d'une manière sélective, avec lesdits premiers contacts électriques fixes et sont angulairement solidaires avec ledit élément d'actionnement ; lesdits premiers contacts électriques fixes comprenant chacun une couche respective de matériau conducteur électriquement isolée des autres couches et s'appuyant sur ladite surface plate externe ; **caractérisé en ce qu'**il comprend un boîtier externe (5), approprié pour être agencé entièrement à l'extérieur du boîtier (6) du dispositif de verrou de direction (2) et pour être couplé de manière amovible au boîtier (6) ; le boîtier externe (5) dudit commutateur rotatif logeant ladite carte de circuit imprimé, lesdits premiers contacts électriques fixes et au moins lesdits seconds contacts mobiles ; l'élément d'actionnement (30) étant couplé au boîtier externe (5) de manière pivotante autour dudit axe fixe (26) dans une position axialement fixe.

8. Commutateur selon la revendication 7, **caractérisé en ce que** chacune desdites couches est directement déposée sur ladite carte de circuit imprimé.

9. Commutateur selon la revendication 7 ou 8, **caractérisé en ce que** lesdits contacts électriques mobiles comprennent un corps rotatif (37) sensiblement en forme de Z, comprenant une partie intermédiaire angulairement solidaire avec ledit élément d'actionnement, deux bras latéraux opposés et une pluralité d'ailettes élastiques réalisées avec un matériau électriquement conducteur et agencées comme un peigne sur ledit corps rotatif pour coopérer de manière coulissante avec lesdites couches respectives.

10. Commutateur selon la revendication 9, **caractérisé en ce que** ledit corps rotatif comprend une paire desdites ailettes élastiques agencées parallèlement entre elles et agencées côte-à-côte pour au moins certaines desdites couches.
